# EUROPÄISCHE PATENTSCHRIFT

(11) **EP 1 588 899 B1**
(45) Veröffentlichungstag und Bekanntmachung des Hinweises auf die Patenterteilung: **15.08.2007**
(21) Anmeldenummer: 05000560.2
(22) Anmeldetag: 13.01.2005
(51) Int. Cl.: B60R 13/08, B60R 13/02

(54) **Verkleidungsteil für eine Fläche einer Karosserie eines Kraftfahrzeugs**
Trim component for a vehicle body surface
Elément de revêtement pour une surface de carosserie d'un véhicule

(30) Priorität: 20.04.2004 DE 102004018763
(43) Veröffentlichungstag der Anmeldung: 26.10.2005
(73) Patentinhaber: Dr.Ing. h.c. F. Porsche Aktiengesellschaft, 70435 Stuttgart (DE)
(72) Erfinder: Nabert, Bernd, 72296 Schopfloch (DE); Lutz, Erwin, 71701 Schwieberdingen (DE); Diehm, Frank, 74366 Kirchheim (DE)

(56) Entgegenhaltungen:
- WO-A-99/44862
- US-A- 3 077 426

## Beschreibung

Bei der Erfindung wird ausgegangen von einem Verkleidungsteil für eine Fläche einer Karosserie eines Kraftfahrzeugs gemäß Oberbegriff des Anspruchs 1.

Ein gattungsbildendes Verkleidungsteil ist der US 48 01 169 zu entnehmen. Es ist als Matte ausgeführt und wird an die Form eines Aufnahmeraums, hier der Kofferraum, des Kraftfahrzeugs angepasst, so dass es die den Aufnahmeraum begrenzenden Flächen der Karosserie verkleidend abdeckt. Die Matte ist aus einem Faservlies hergestellt und besitzt wenigstens einen ersten und zweiten Mattenabschnitt, die miteinander verbunden sind. In dem Verbindungsbereich der beiden Mattenabschnitte sind in einen Mattenrand des einen Mattenabschnitts mehrere Trennschnitte eingebracht, die das Faservlies durchsetzen, wodurch mehrere durch die Trennschnitte voneinander separierte Laschen gebildet sind, wie es in der US 48 01 169 in Fig. 3 dargestellt ist. Durch die Trennschnitte wird im Stand der Technik ein faltenfreies Aufeinanderlegen der beiden Mattenabschnitte ermöglicht. Die Verbindung selbst der beiden Mattenabschnitte wird durch einen Klebstoff erreicht.

Aus der US 30 77 426 ist ein Verkleidungsteil für eine Fläche eines Kraftfahrzeugs bekannt. Das Verkleidungsteil wird gebildet aus zumindest zwei Platten, die in einem Verbindungsbereich aneinander befestigt sind. Dazu weist jede Platte im Verbindungsbereich mehrere mit großem Abstand zueinander liegende steife Laschen auf, die jeweils an der Rückseite der anderen Platte zu liegen kommen.

Aus der DE 42 15 750 C1 ist ferner ein Verkleidungsteil aus Nadelfilzplatten bzw. aus einem Kunstfaservlies ersichtlich, welches als einstückiges Formteil ausgebildet und in einen Verdeckkasten zur Verkleidung der den Verdeckkasten begrenzenden Flächen eingesetzt ist.

Aufgabe der Erfindung ist es, ein Verkleidungsteil der gattungsbildenden Art anzugeben, bei welchem die beiden Mattenabschnitte auf einfache Art und Weise miteinander verbunden werden können.

Gelöst wird diese Aufgabe mit einem Verkleidungsteil, welches die in Anspruch 1 genannten Merkmale umfasst. Weiterbildungen der Erfindung sind in den Unteransprüchen angegeben.

Die mit der Erfindung hauptsächlich erzielten Vorteile sind darin zu sehen, dass durch das Ineinanderstecken des ersten und zweiten Mattenabschnitts einerseits eine einfache und schnelle Montage der Matte gegeben ist und andererseits durch die lösbare Verbindung der beiden Mattenabschnitte das Produktrecycling verbessert ist, da keine zusätzlichen Stoffe, wie beispielsweise Klebstoffe oder ähnliches, zur Verbindung der beiden Mattenabschnitte vorhanden sind. Überdies ist eine einfache und zerstörungsfreie Demontage möglich, so dass auch einzelne Mattenabschnitte im Reparaturfall ausgetauscht werden könnten. Überdies ist die erfindungsgemäße Verbindungstechnik kostengünstig, da sich die beiden Mattenabschnitte gegenseitig halten und keine zusätzlichen Verbindungsmittel benötigt werden. Besonders positiv wird die Verbindung durch den erfindungsgemäßen Verfestigungsrand beeinflusst, der dem Faservlies zumindest im Bereich des Mattenrandes eine größere Festigkeit bzw. Steifigkeit gegenüber den übrigen Abschnitten des Faservlies verleiht und so die Verbindung beider Abschnitte der Matte festigt. Außerdem ist vorteilhaft, dass durch die mehreren Trennschnitte eine Verbindung der beiden Mattenabschnitte über eine größere Länge erreicht werden kann.

In besonders vorteilhafter Weiterbildung nach Anspruch 2 ist der Verfestigungsrand als Pressrand ausgeführt, der insbesondere ohne weitere Materialzusätze lediglich durch Pressen des Faservlies hergestellt wird, wodurch im Bereich des Mattenrandes das Faservlies verdichtet wird, wodurch dort die Dicke reduziert wird. Dieser Pressrand kann daher auch als Dünnpressrand bezeichnet werden.

Besonders bevorzugt wird ein Ausführungsbeispiel mit den in Anspruch 3 angegebenen Merkmalen. So kann beispielsweise ein erster Faserwerkstoff gewählt werden, welcher gute Geräusch dämmende Eigenschaften aufweist, um die Geräuschentwicklung innerhalb des Fahrzeugs zu verringern. Ein zweiter Faserwerkstoff kann beispielsweise gute Verfestigungseigenschaften aufweisen, um auf besonders einfache Weise den Verfestigungsrand herstellen zu können. Unter Verfestigungseigenschaften wird im Zuge der Anmeldung verstanden, dass beispielsweise durch Pressen und/oder Druck, gegebenenfalls unter Wärmeeinwirkung, ein plastisches Verformen des Faserwerkstoffs erreicht werden kann, wodurch der Verfestigungsrand hergestellt wird. Andererseits könnte ein zweiter Faserwerkstoff verwendet werden, bei dem die Verfestigungseigenschaften dadurch erreicht werden, dass er unter Einwirkung von Druck, mechanischem Pressen und/oder Wärme eine Verbindung mit dem ersten Faserwerkstoff eingeht, um so den Verfestigungsrand ausführen zu können.

Nach einem in Anspruch 5 aufgeführten Ausführungsbeispiel ist vorteilhaft, dass die zumindest die zwei Mattenabschnitte aufweisende Matte auf einfache Art und Weise zu einem Formteil umgeformt werden kann. So wäre es beispielsweise möglich, die Matte aus zwei separaten Mattenabschnitten mit dem erfindungsgemäßen Verbindungsbereich zusammenzusetzen. Es wäre jedoch auch denkbar, dass die Matte einen Einschnitt aufweist, der die beiden Mattenabschnitte teilt, wodurch beispielsweise durch Umklappen der Mattenabschnitte eine schalen- bzw. kastenartige Form für die Matte hergestellt werden kann, wie es insbesondere zum Auskleiden eines Aufnahmeraums vorteilhaft ist.

Die Erfindung wird nachfolgend anhand eines Ausführungsbeispieles mit Bezug auf die Zeichnung näher erläutert. Es zeigen:
- Fig. 1: in perspektivischer Ansicht ein Kraftfahrzeug,
- Fig. 2: eine Draufsicht auf ein Verkleidungsteil für eine Fläche des Kraftfahrzeugs und
- Fig. 3: einen Schnitt entlang der Linie III-III in Fig. 2.

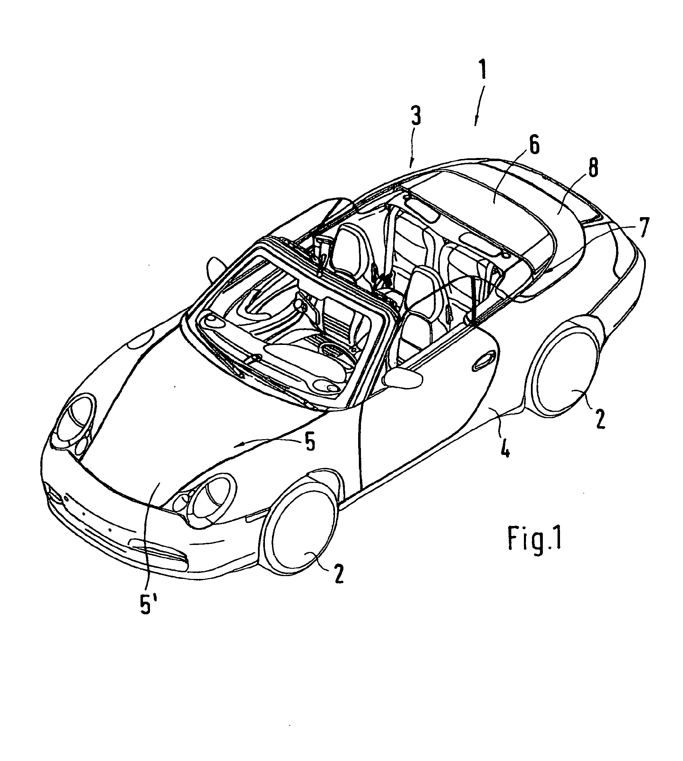

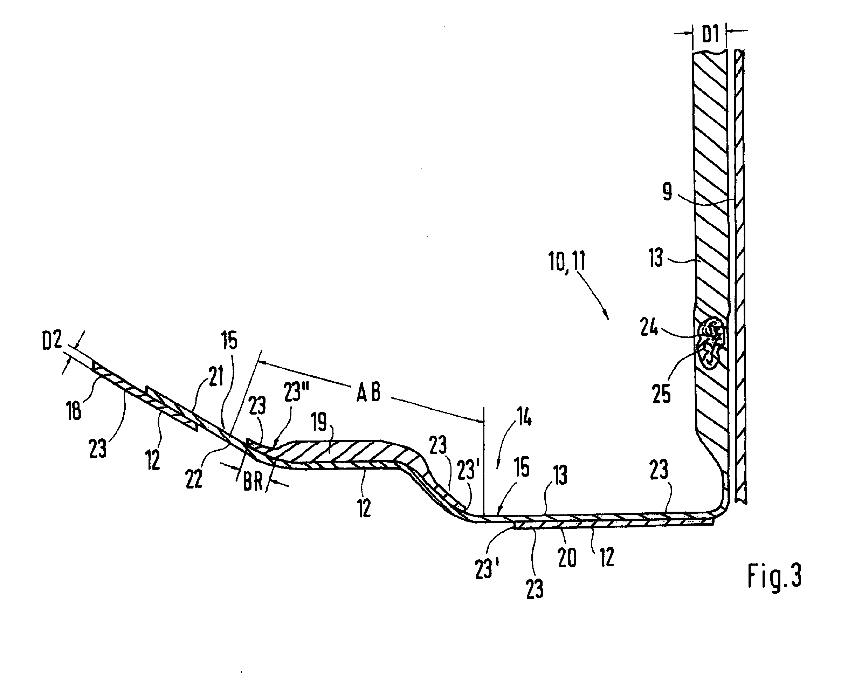

Die Fig. 1 zeigt ein Kraftfahrzeug 1, welches einen von Rädern 2 getragenen Aufbau 3 mit einer Karosserie 4 umfasst. Im gezeigten Ausführungsbeispiel ist das Kraftfahrzeug als Personenwagen, insbesondere als Cabriolet, ausgebildet, welches frontseitig unter einer zu öffnenden und verschließenden Haube 5' einen ersten Aufnahmeraum 5 und heckseitig einen zweiten Aufnahmeraum aufweist, welcher zweite Aufnahmeraum zur Aufnahme eines hier in Offenstellung OT gezeigten Verdeckes 6 dient und daher im folgenden als Verdeckkasten 7 bezeichnet wird, der von einem Verdeckkastendeckel 8 zumindest teilweise verschlossen und freigegeben werden kann. Der unterhalb des Verdeckkastendeckels 8 liegende Verdeckkasten 7 sowie der Aufnahmeraum 5 werden von Flächen 9 (Fig. 3) der Karosserie 4 bzw. des Aufbaus in an sich bekannter Weise begrenzt. So wird üblicherweise der Aufnahmeraum 5 und der Verdeckkasten 7 von Seitenwänden, einem Boden und einem Deckel, hier die Fronthaube bzw. der Verdeckkastendeckel 8, begrenzt, wobei lediglich in Fig. 3 beispielhaft eine derartige Wand bzw. eine Fläche 9 dargestellt ist.

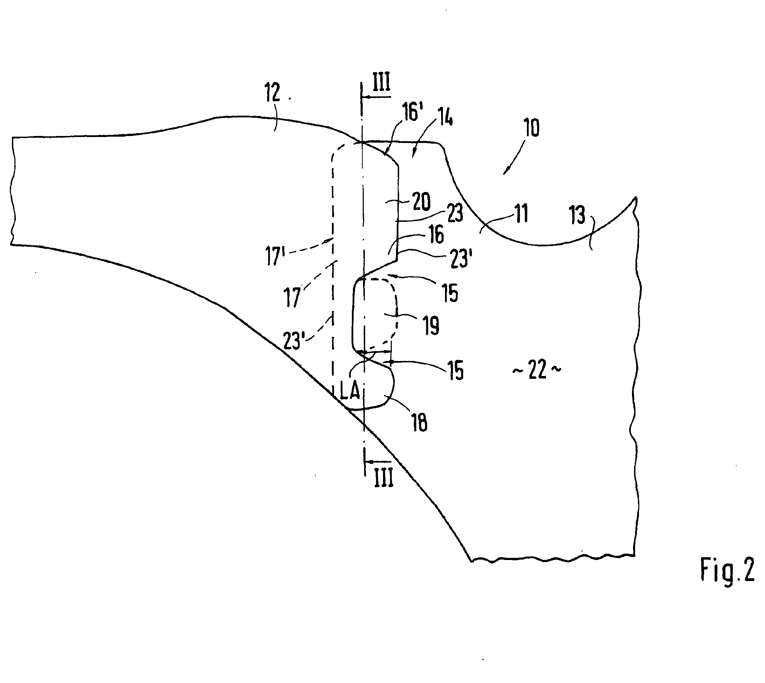

Anhand der Fig. 2 und 3 wird im folgenden ein Verkleidungsteil 10 für eine derartige Fläche 9 der Karosserie 4 beschrieben. Es ist als Textil - und/oder Kunststoff - Faservlies, insbesondere PET - Faservlies mit einem Flächengewicht von 1200g/m², in Form einer Matte 11 ausgebildet und umfasst wenigstens zwei Mattenabschnitte 12 und 13, die in einem Verbindungsbereich 14 durch Ineinanderstecken miteinander verbunden bzw. aneinander gehalten sind. Die Mattenabschnitte 12 und 13 können jeweils separate Teile der Matte 11 bilden oder auch zusammenhängend mit einem weiteren, hier nicht dargestellten Mattenabschnitt ausgeführt sein und durch entsprechendes Umklappen als Verkleidungsteil 10 für den Aufnahmeraum 5 bzw. Verdeckkasten 7 eine dreidimensionale Form, beispielsweise einer Wanne oder Schale, einnehmen.

Im Verbindungsbereich 14 besitzt einer der Mattenabschnitte 12 bzw. 13 wenigstens einen Trennschnitt 15, hier mehrere Trennschnitte 15, die randoffen ausgeführt und den Mattenrand 16' des Mattenabschnitts 12 bzw. Mattenrand 17' des Mattenabschnitts 13 durchsetzen. Die Trennschnitte 15 sind mit seitlichem Abstand AB in den Mattenrand 16' bzw. 17' und mit einer Länge LA in den im Bereich der Mattenränder 16' bzw. 17' liegenden Mattenrandstreifen 16 bzw. 17 eingebracht, so dass im Mattenrandstreifen 16 bzw. 17 mehrere Laschen 18, 19 und 20 gebildet sind, die voneinander durch die Trennschnitte 15 separiert sind. Der andere Mattenabschnitt 13 wird mit seinem Mattenrand 17' bzw. Mattenrandstreifen 17 so in den Mattenabschnitt 12 eingesteckt, dass er die Trennschnitte 15 durchsetzt und dass die Laschen 18, 19 und 20 jeweils abwechselnd auf der einen Seite 21 bzw. anderen Seite 22 des Mattenabschnitts 12 zu liegen kommen, wie dies in Fig. 3 im Schnitt dargestellt ist. Die mittlere Lasche 19 ist dabei der Seite 21 und die Laschen 18 und 20 der Seite 22 zugeordnet. Um die Verbindung im Verbindungsbereich 14 zu versteifen bzw. zu stabilisieren, ist wenigstens einer der beiden Mattenränder 16' bzw. 17', vorzugsweise beide Mattenränder 16' und 17' und insbesondere die Mattenrandstreifen 16 und 17, zumindest teilweise bzw. abschnittweise als Verfestigungsrand 23 ausgeführt, in dem das Faservlies beispielsweise durch Verdichten verfestigt ist. Im übrigen, nicht verfestigten (bauschigen) Bereich des Faservlies, besitzt dieses eine Dicke D1 die größer als die Dicke D2 im Verfestigungsrand 23 ist. Der Verfestigungsrand 23 kann beispielsweise durch Druck und/oder mechanisches Pressen, gegebenenfalls unter Wärmeeinwirkung hergestellt werden, wodurch der Mattenrand 16' bzw. 17' der Mattenrandstreifen 16 bzw. 17 mit den Laschen 18, 19 und 20 eine höhere Festigkeit bzw. Steifigkeit besitzen und so der lösbaren, gesteckten Verbindung der Mattenabschnitte 12 und 13 eine höhere Festigkeit geben. Der Verfestigungsrand 23 folgt insbesondere dem äußeren Begrenzungsrand 23' des entsprechenden Mattenabschnitts 12 bzw. 13 und ist beispielsweise als Streifen 23" mit einer Breite BR ausgeführt. Der Verfestigungsrand 23 kann jedoch auch mit dem entsprechenden Mattenrandstreifen 16 bzw. 17 zusammen fallen und im Mattenrand 16' bzw. 17' liegen. Insbesondere die Laschen 18, 19, 20 und/oder der Mattenrand 17' weisen den Verfestigungsrand 23 auf.

Durch das Verfestigen des Faservlies im Mattenrandstreifen 16 bzw. 17 werden Fasern 24 bzw. 25 des Vlies verdichtet, also zusammengepresst und ggf. miteinander verbunden. Der Verfestigungsrand 23 kann demnach auch als Pressrand bezeichnet werden, in dem die Dicke D2 geringer als die Dicke D1 ist. Das Faservlies der Matte 11 kann aus Fasern 24 und 25 aus einem Faserwerkstoff oder mehreren unterschiedlichen Faserwerkstoffen hergestellt sein, wobei der Faserwerkstoff für eine der Fasern 24 insbesondere Geräusch dämmende Eigenschaften aufweist und der zweite Faserwerkstoff für die andere der Fasern 25 Verfestigungseigenschaften zur Ausbildung des Verfestigungsrandes 23 besitzt. So könnten die Fasern 25 aus einem Faserwerkstoff gefertigt sein, welcher unter Druck und/oder mechanischem Pressen und/oder Wärme bleibend plastisch verformt bzw. verfestigt wird, so dass der Verfestigungsrand 23 dauerhaft die Verfestigungseigenschaften für eine stabile Verbindung im Verbindungsbereich 14 behält. Zusätzlich bzw. alternativ könnte durch Druck, mechanisches Pressen und/oder Wärme der zweite Faserwerkstoff für die Fasern 25 fließen, so dass die anderen Fasern 24 zumindest teilweise nach Art einer Matrix darin eingebettet sind, wodurch der Verfestigungsrand 23 hergestellt wird. Nach einer alternativen Ausführungsform könnte das Vlies lediglich aus einem Faserwerkstoff mit Fasern 24 hergestellt sein, die - um den Pressrand 23 ausführen zu können - beschichtet sind, welche Beschichtung unter Druck und/oder Pressen, ggf. unter Wärmeeinwirkung, die Fasern 24 verbindet. In einer weiteren Ausführungsform könnten für das Vlies Fasern 24 aus einem einzigen Faserwerkstoff verwendet werden, der sowohl Geräusch dämmende Eigenschaften als auch Verfestigungseigenschaften aufweist.

## Patentansprüche

1. Verkleidungsteil (10) für eine Fläche (9) einer Karosserie (4) eines Kraftfahrzeugs (1), welches Verkleidungsteil (10) als Matte (11) aus einem Faservlies mit wenigstens einem ersten und zweiten Mattenabschnitt (12, 13) ausgeführt ist, welche Mattenabschnitte (12, 13) miteinander verbunden sind, wobei wenigstens der erste Mattenabschnitt (12) im Verbindungsbereich (14) mit dem zweiten Mattenabschnitt (13) mehrere den Mattenrand (17') durchsetzende Trennschnitte (15) aufweist, die mit Abstand (Ab) zueinander liegen, so dass mehrere Laschen (18, 19, 20) durch die Trennschnitte (15) voneinander separiert sind, **dadurch gekennzeichnet, dass** der zweite Mattenabschnitt (12, 13) im Verbindungsbereich (14) die Trennschnitte (15) des ersten Mattenabschnitts (12, 13) durchsetzt und so in den ersten Mattenabschnitt (12) eingesteckt ist, dass die Laschen (18, 19, 20) jeweils abwechselnd auf Seiten (21, 22) des ersten Mattenabschnitts (12) zu liegen kommen, und dass der Mattenrand (16', 17') zumindest des ersten oder zweiten Mattenabschnitts (12, 13) wenigstens im Verbindungsbereich (14) als Verfestigungsrand (23) ausgeführt ist.

2. Verkleidungsteil nach Anspruch 1, **dadurch gekennzeichnet, dass** der Verfestigungsrand (23) als Pressrand ausgeführt ist, in dem Faservlies verdichtet ist.

3. Verkleidungsteil nach Anspruch 1 oder 2, **dadurch gekennzeichnet, dass** das Faservlies unterschiedliche Fasern (24, 25) aus zumindest einem ersten und einem zweiten Faserwerkstoff aufweist.

4. Verkleidungsteil nach Anspruch 3, **dadurch gekennzeichnet, dass** der erste Faserwerkstoff Geräusch dämmende Eigenschaften und der zweite Faserwerkstoff Verfestigungseigenschaften aufweist.

5. Verkleidungsteil nach Anspruch 1, **dadurch gekennzeichnet, dass** die Matte (11) als Formteil ausgeführt ist.

6. Verkleidungsteil nach Anspruch 1, **dadurch gekennzeichnet, dass** die Matte (11) zumindest zweiteilig ausgeführt und jeweils ein separates Teil einen der Mattenabschnitte (12, 13) bildet.

7. Verkleidungsteil nach Anspruch 5, **dadurch gekennzeichnet, dass** die Matte (11) mit ihrer Form an die Flächen (9) eines Aufnahmeraums (5), insbesondere Verdeckkasten (7), des Kraftfahrzeugs (1) angepasst ist.

## Claims

1. A covering part (10) for a surface (9) of a body (4) of a motor vehicle (1), which covering part (10) is constructed as a mat (11) made of a non-woven fabric with at least a first and a second mat portion (12, 13), which mat portions (12, 13) are connected to one another, wherein at least the first mat portion (12) has, in the region (14) in which it is connected to the second mat portion (13), a plurality of dividing cuts (15) which penetrate the mat edge (17') and which are arranged with mutual spacing (Ab) so that a plurality of tabs (18, 19, 20) are separated from one another by the dividing cuts (15), **characterised in that** the second mat portion (12, 13) penetrates the dividing cuts (15) in the first mat portion (12, 13) in the connecting region (14) and is inserted into the first mat portion (12) so that the tabs (18, 19, 20) come to rest against alternate sides (21, 22) of the first mat portion (12), and **in that** the mat edge (16', 17') of at least the first or second mat portion (12, 13) is constructed as a strengthening edge (23) at least in the connecting region (14).

2. A covering part according to claim 1, **characterised in that** the strengthening edge (23) is constructed as a pressed edge in which the non-woven fabric is compacted.

3. A covering part according to claim 1 or 2, **characterised in that** the non-woven fabric contains different fibres (24, 25) from at least one first and one second fibrous material.

4. A covering part according to claim 3, **characterised in that** the first fibrous material has sound-insulating properties and the second fibrous material has strengthening properties.

5. A covering part according to claim 1, **characterised in that** the mat (11) is constructed as a shaped part.

6. A covering part according to claim 1, **characterised in that** the mat (11) is constructed in at least two parts and each separate part forms one of the mat portions (12, 13).

7. A covering part according to claim 5, **characterised in that** the shape of the mat (11) is adapted to the surfaces (9) of a storage space (5), especially a folding-top compartment (7), of the motor vehicle (1).

## Revendications

1. Partie d'habillage (10) pour une surface (9) d'une carrosserie (4) d'un véhicule (1), laquelle partie d'habillage (10) est réalisée sous la forme d'un tapis (11) à base d'un non-tissé fibreux comprenant au moins une première et une seconde parties de tapis (12, 13), lesquelles parties de tapis (12, 13) sont reliées entre elles, au moins la première partie de tapis (12) présentant dans la zone de liaison (14) avec la seconde partie de tapis (13) plusieurs coupes de séparation (15) traversant le bord de tapis (17'), qui sont disposées à distance (Ab) les unes des autres, de sorte que plusieurs pattes (18, 19, 20) sont séparées les unes des autres par les coupes de séparation (15), **caractérisée en ce que** la seconde partie de tapis (12, 13) dans la zone de liaison (14) traverse les coupes de séparation (15) de la première partie de tapis (12, 13) et est emboîtée ainsi dans la première partie de tapis (12), de telle sorte que les pattes (18, 19, 20) arrivent à chaque fois alternativement sur des côtés (21, 22) de la première partie de tapis (12) et que le bord de tapis (16', 17') au moins de la première ou de la seconde partie de tapis (12, 13) est réalisé au moins dans la zone de liaison (14) comme bord de consolidation (23).

2. Partie d'habillage selon la revendication 1, **caractérisée en ce que** le bord de consolidation (23) est réalisé comme bord de compression dans lequel du non-tissé fibreux est comprimé.

3. Partie d'habillage selon la revendication 1 ou 2, **caractérisée en ce que** le non-tissé fibreux présente différentes fibres (24, 25) à partir d'au moins d'un premier et d'un second matériau fibreux.

4. Partie d'habillage selon la revendication 3, **caractérisée en ce que** le premier matériau fibreux présente des propriétés insonorisantes et le second matériau fibreux des propriétés de consolidation.

5. Partie d'habillage selon la revendication 1, **caractérisée en ce que** le tapis (11) est réalisé comme une pièce moulée.

6. Partie d'habillage selon la revendication 1, **caractérisée en ce que** le tapis (11) est réalisé au moins en deux parties et forme à chaque fois une partie séparée de l'une des parties de tapis (12, 13).

7. Partie d'habillage selon la revendication 5, **caractérisée en ce que** le tapis (11) et sa forme sont adaptés aux surfaces (9) d'un espace de logement (5), en particulier des caissons de capote (7) du véhicule (1).
